(19) Europäisches Patentamt / European Patent Office / Office européen des brevets

(11) **EP 3 644 232 B1**

(12) **EUROPEAN PATENT SPECIFICATION**

(45) Date of publication and mention of the grant of the patent:
**14.06.2023 Bulletin 2023/24**

(21) Application number: **18889062.8**

(22) Date of filing: **16.08.2018**

(51) International Patent Classification (IPC):
**G06V 10/74** $^{(2022.01)}$   **G06K 9/62** $^{(2022.01)}$
**G06F 16/957** $^{(2019.01)}$

(52) Cooperative Patent Classification (CPC):
**G06V 10/761; G06F 16/957; G06F 18/22;**
**G06F 18/24133**

(86) International application number:
**PCT/CN2018/100758**

(87) International publication number:
**WO 2019/114305 (20.06.2019 Gazette 2019/25)**

(54) **METHOD AND DEVICE FOR CLASSIFYING SAMPLES TO BE ASSESSED**

VERFAHREN UND VORRICHTUNG ZUR KLASSIFIZIERUNG VON AUSZUWERTENDEN PROBEN

PROCÉDÉ ET DISPOSITIF DE CLASSIFICATION D'ÉCHANTILLONS À ÉVALUER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2017 CN 201711322274**

(43) Date of publication of application:
**29.04.2020 Bulletin 2020/18**

(73) Proprietor: **Advanced New Technologies Co., Ltd.**
**George Town, Grand Cayman KY1-9008 (KY)**

(72) Inventors:
 • **ZHOU, Shuheng**
  **Hangzhou, Zhejiang 31121 (CN)**
 • **ZHU, Huijia**
  **Hangzhou, Zhejiang 31121 (CN)**
 • **ZHAO, Zhiyuan**
  **Hangzhou, Zhejiang 31121 (CN)**

(74) Representative: **Goddar, Heinz J.**
 **Boehmert & Boehmert**
 **Anwaltspartnerschaft mbB**
 **Pettenkoferstrasse 22**
 **80336 München (DE)**

(56) References cited:
 **CN-A- 106 682 687    CN-A- 107 194 430**
 **CN-A- 108 197 638    US-A1- 2012 243 779**

 • **Swati Pandit ET AL: "ENHANCED SPAM FILTERING WITH FUZZY SIMILARITY", International Journal of Advanced Computational Engineering and Networking, 27 February 2015 (2015-02-27), pages 2320-2106, XP055737719, Retrieved from the Internet: URL:http://www.iraj.in/journal/journal_fil e/journal_pdf/3-108-142259954739-43.pdf [retrieved on 2020-10-07]**
 • **ABDELRAHIM ALI AHMED A ET AL: "Feature selection and similarity coefficient based method for email spam filtering", 2013 INTERNATIONAL CONFERENCE ON COMPUTING, ELECTRICAL AND ELECTRONIC ENGINEERING (ICCEEE), IEEE, 26 August 2013 (2013-08-26), pages 630-633, XP032505805, DOI: 10.1109/ICCEEE.2013.6634013 [retrieved on 2013-10-15]**

EP 3 644 232 B1

## Description

### TECHNICAL FIELD

One or more implementations of the present specification relate to the field of computer technologies, and in particular, to sample classification and identification.

### BACKGROUND

As the Internet upgrades, a wide variety of information and content are generated on the network every day. In many cases, these information and content need to be identified and classified. For example, many network platforms generate a large amount of junk information, advertising information, etc. To ensure user experience, junk information and advertising information need to be identified and filtered. For another example, to improve the network environment, it is also necessary to identify and classify content of the network that contains pornography, violence or that violates laws and regulations.

To identify and classify the network content, the method of establishing a classification sample database is usually used. For example, an advertisement "black sample" database can be created for advertising information and store collected example samples, which are also referred to as black samples. The network content to be assessed is compared with the black samples in the black sample database to determine whether the network content to be assessed fall in the same category in the classification sample database according to the similarity of the comparison, that is, whether the network content is also advertisement content.

Typically, the sample database contains a large quantity of example samples. These samples are usually collected manually and therefore vary in quality. Some example samples are of low quality, and have poor generalization ability. Therefore, the content to be assessed does not fall in the same category as the example sample even though the content has a high similarity with the example sample. This brings much difficulty in classifying and assessing samples.

Therefore, improved solution is needed to assess and classify the content to be assessed and samples more effectively.

Swati Pandit ET AL, "ENHANCED SPAM FILTERING WITH FUZZY SIMILARITY", International Journal of Advanced Computational Engineering and Networking, 27. February 2015, pages 2320-2106, discloses spam filtering techniques which classify messages among two categories, spam and non-spam. Different decision tree algorithms are studied for spam classification then they are compared analyzed and evaluated on the basis of various measures as Feature preprocessing, Feature Extraction, Measure of best split, Types of Attributes, and Detection rate. Finally fuzzy similarity measure algorithm is proposed which gives higher accuracy and low false positive and low false negative rate.

### SUMMARY

One or more implementations of this specification describe a method and a device. Similarity between a sample to be assessed and an example sample is assessed more effectively and more accurately by introducing consideration of sample quality of the example sample during assessment.

According to a first aspect, a method for classifying samples of pictures to be assessed is provided, including: obtaining samples T to be assessed and sample feature Ft of sample T to be assessed; selecting a first quantity N of example samples from a classification sample database, wherein the database consists of samples which belong to a same category; obtaining feature similarity $SIM_i$ of the samples T to be assessed and each example sample i among the N example samples, where feature similarity $SIM_i$ is determined based on sample feature Ft of samples T to be assessed and sample feature $F_i$ of each example sample i; obtaining a sample quality $Q_i$ of each example sample i, wherein the sample quality is determined by obtaining historical feature similarities between a plurality of historical samples T and the example sample, and assessment results of the plurality of historical samples; determining comprehensive similarity $S_i$ between sample T to be assessed and each example sample i based on at least a difference value $r_i$ between feature similarity $SIM_i$ and sample quality $Q_i$, wherein $S_i = a + b * r_i * c$, where a and b are constants, a + b = 1, and c is a coefficient associated with sample quality $Q_i$, and wherein in a case of $r_i >= 0$, $c = 1/(1-Q_i)$ and in a case of $r_i < 0$, $c = 1/Q_i$; and determining, based on comprehensive similarity $S_i$, whether sample T to be assessed falls in the category of the classification sample database.

In an implementation, the selecting the first quantity N example samples from a classification sample database includes: calculating feature similarity between samples T to be assessed and each of a second quantity M example samples based on sample feature Ft of sample T to be assessed and sample features of the second quantity M example samples in the classification sample database, where the second quantity M is greater than the first quantity N; and selecting the first quantity N example samples from the second quantity M example samples based on feature similarity between the sample T to be assessed and each second quantity M example samples.

In an implementation, the selecting the first quantity N of example samples from a classification sample database includes selecting the first quantity N of example samples from the classification sample database based on a sorting result of sample quality of each sample in the classification sample database.

According to one implementation, feature similarity $SIM_i$ is determined by normalizing a distance between sample feature $F_t$ of sample T to be assessed and sample feature $F_i$ of each example sample i.

According to one implementation, the method above further includes: determining whether sample T to be assessed falls in the category of the classification sample database based on comprehensive similarity $S_i$ includes determining, based on comprehensive similarities $S_i$ between sample T to be assessed and each example sample i, a total similarity score of the sample T to be assessed, and determining, based on the total similarity score, whether sample T to be assessed falls in the category of the classification sample database.

In an implementation, the determining a total similarity score of the sample T to be assessed includes: if at least one $r_i >= 0$, determining the total similarity score as a maximum value among comprehensive similarities $S_i$ between the sample T to be assessed and each example sample i; or otherwise, determining the total similarity score as a minimum value among comprehensive similarities $S_i$ between the sample T to be assessed and each example sample i.

In an implementation, the determining a total similarity score of the sample T to be assessed includes determining the total similarity score as the average value of comprehensive similarities $S_i$ between sample T to be assessed and each example sample i.

According to a second aspect, a computer readable storage medium is provided, where the medium stores a computer program, and when the computer program is executed in a computer, the computer is enabled to perform the method of the first aspect.

According to a third aspect, a computing device is provided, including a memory and a processor, where the memory stores executable code, and when the processor executes the executable code, the method of the first aspect is implemented.

When the method and the device provided in the implementations of this specification are used, the feature similarity between the sample to be assessed and the example sample and the sample quality of the example sample are comprehensively considered to determine the comprehensive similarity between the sample to be assessed and the example sample. Based on the comprehensive similarity, the sample to be assessed is classified, thereby reducing or avoiding the adverse impact of the varied sample quality on the assessment results and making it more effective and more accurate to determine the category of the sample to be assessed.

## BRIEF DESCRIPTION OF DRAWINGS

To describe the technical solutions in the implementations of the present disclosure more clearly, the following briefly introduces the accompanying drawings required for describing the implementations. Apparently, the accompanying drawings in the following description are merely some implementations of the present disclosure, and a person of ordinary skill in the field may still derive other drawings from these accompanying drawings without creative efforts.

FIG. 1 is a schematic diagram illustrating an application scenario of an implementation disclosed in this specification;
FIG. 2 is a flowchart illustrating a method, according to one implementation;
FIG. 3 is a flowchart illustrating selection of a certain quantity of example samples, according to one implementation;
FIG. 4 is a flowchart illustrating selection of a certain quantity of example samples, according to another implementation;
FIG. 5 is a flowchart illustrating selection of a quantity of example samples, according to another implementation; and
FIG. 6 is a schematic block diagram illustrating a classification device, according to one implementation.

## DESCRIPTION OF IMPLEMENTATIONS

The solution provided in this specification is described below with reference to the accompanying drawings.

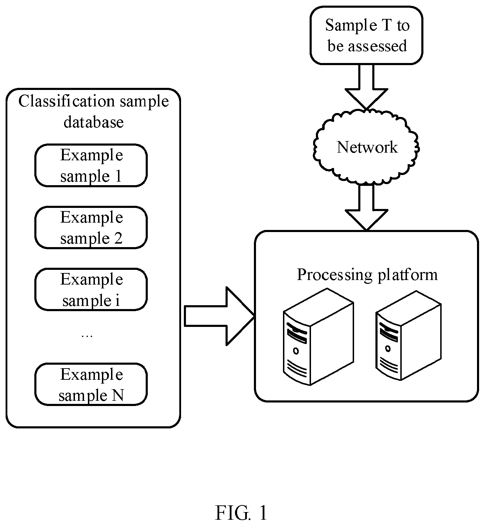

FIG. 1 is a schematic diagram illustrating an application scenario of an implementation disclosed in this specification. In FIG. 1, a processing platform obtains a sample to be assessed and sample information of example samples from a sample database. The sample information includes sample features of example samples and sample quality of example samples. The processing platform then determines comprehensive similarity between the sample to be assessed and the example samples based on feature similarity between the sample to be assessed and each example samples and sample quality of the example samples. The described processing platform can be any platforms with computing and processing capabilities, such as a server. The described sample database can be sample database created by collecting samples and is used to classify or identify samples, including a plurality of example samples. Although the sample database shown in FIG. 1 is stored in an independent database, it can be understood that the sample database can also be stored in the processing platform. By using assessment methods in the implementations, the processing platform uses the sample quality of the example samples as a factor in determining the comprehensive similarity between the sample to be assessed and the example samples. Therefore, reverse impact of the varied sample quality of the example samples on the assessment results is reduced or avoided.

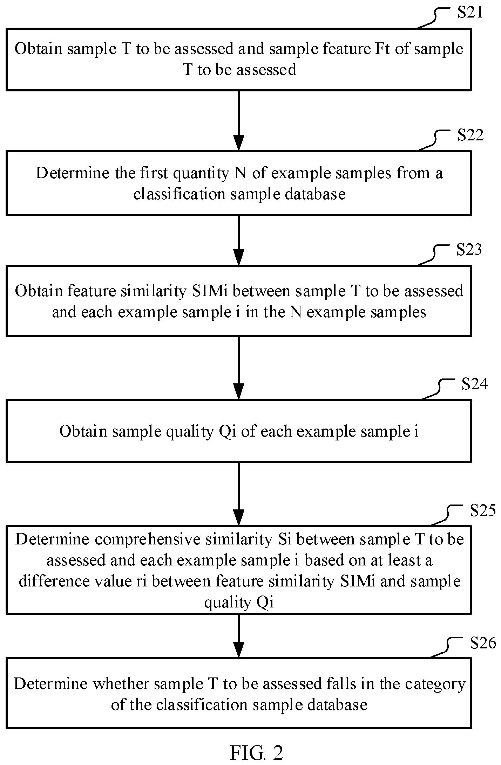

The following describes in detail the method the processing platform used to classify samples to be assessed. FIG. 2 is a flowchart illustrating a method, according to one implementation. The process can be performed by a processing platform with computing capability, such as a server as shown in FIG. 1. As shown in FIG. 2, the method includes the following steps:

Step S21: Obtain sample T to be assessed and sample feature Ft of sample T to be assessed.

Step S22: Select the first quantity N of example samples from classification sample database.

Step S23: Obtain feature similarity SIMi between sample T to be assessed and each example sample i of the first quantity N of example samples, where feature similarity SIMi is determined based on sample feature Ft of sample T to be assessed and sample feature Fi of each example sample i.

Step S24: Obtain sample quality Qi of each example sample i. The sample quality is determined by obtaining historical feature similarities between a plurality of historical samples T and the example sample, and final assessment results of the plurality of historical samples.

Step S25: Determine comprehensive similarity Si between sample T to be assessed and each example sample i based on at least a difference value ri between feature similarity SIMi and sample quality Qi.

Step S26: Determine, based on comprehensive similarity Si, whether sample T to be assessed falls in the category of the classification sample database.

First, in step S21, sample T to be assessed and sample feature Ft of the sample to be assessed are obtained. It can be understood that sample T to be assessed is a picture. In an implementation, the processing platform needs to automatically detect, assess, or classify various content uploaded onto a network. In this case, obtaining sample T to be assessed includes capturing the sample to be assessed from the network. For example, when the processing platform needs to filter advertisement images on the network. samples of images to be assessed can be captured from the network. In another implementation, obtaining sample T to be assessed includes receiving sample T to be assessed, that is, the processing platform analyzes and assesses the received samples to be assessed. For example, after a mobile phone communication system receives a message, the mobile phone communications system needs to determine whether the message is a junk message. In this case, the message can be sent to the processing platform for message classification. The processing platform then assesses and classifies the received message.

For sample T to be assessed, sample feature Ft can be extracted. Sample feature Ft is extracted for machine learning and analysis and is used to identify different samples. In the existing technology, many models can be used to extract features of various samples to implement comparison and analysis. For example, for a picture sample, sample features can include the following: quantity of pixels, mean gray value, median gray value, quantity of sub-regions, sub-region size, sub-region mean gray value , etc. In an unclaimed embodiment for text samples, sample features can include words in text, quantity of words, word frequency, etc. For other unclaimed types of samples, there are corresponding feature extraction methods. Generally, sample features include a plurality of feature elements, and therefore, sample features can be represented as a feature vector composing a plurality of feature elements.

$$Ft = \left( t_1, t_2, \ldots t_n \right),$$

where Ti is the feature elements of the sample to be assessed.

In addition, in step S22, select the first quantity N of example samples from the classification sample database.

It can be understood that the classification sample database is established by collecting samples in advance and is used to classify, compare and identify samples. The database contains a plurality of example samples. For example, a sample database of advertisement pictures contains a large quantity of example advertisement pictures, and an unclaimed sample database of junk messages contains a plurality of example junk messages.

In an implementation, a quantity of example samples contained in the sample database is relatively small for example, the quantity of example samples is less than a certain threshold (for example, 100). In this case, all example samples in the sample database may be used for performing subsequent steps S23-S25. That is, the first quantity N in step S22 is the quantity of all example samples in the classification sample database.

In another implementation, the quantity of example samples contained in the classification sample database is large. For example, the quantity of example samples is greater than a certain threshold (for example, 200). Alternatively, content of the example samples in the sample database is not concentrated. For an unclaimed example, although all samples stored in the sample database of advertisement pictures are advertisement pictures, content of these pictures differs because these pictures may contain either people or items or scenery. In this unclaimed case, the example samples in the sample database can be filtered to determine a quantity N of more targeted example samples for further processing.

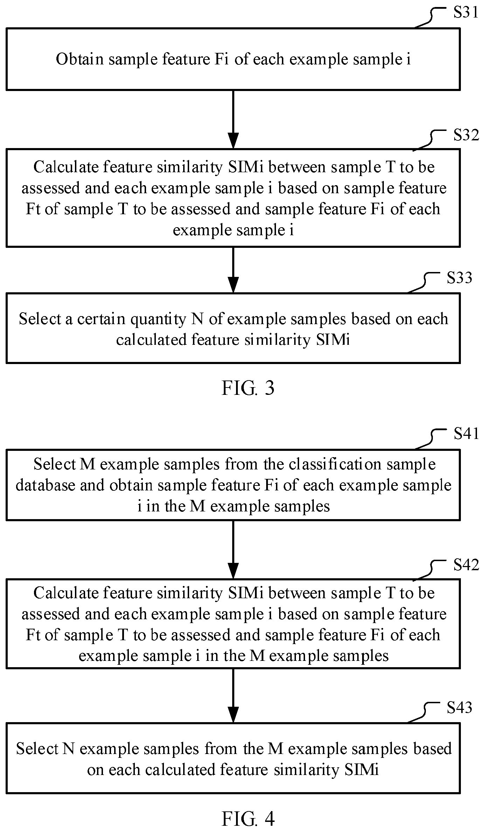

Many ways can be used to determine a certain quantity N example samples from the classification sample database. FIG. 3 is a flowchart illustrating selection of a quantity of example samples based on one implementation. As shown in FIG. 3, first in step S31, sample feature Fi of each example sample i in a classification sample database are obtained. It can be understood that, in correspondence with the sample to be assessed, sample feature Fi of each example sample i may similarly be represented by a feature vector.

$$F_i = \left( f_{i1}, f_{i2}, \cdots f_{in} \right)$$

In step S32, feature similarity SIMi between sample T to be assessed and each example sample i is calculated based on sample feature Ft of sample T to be assessed and sample feature Fi of each example sample i.

In an implementation, the distance di between sample T to be assessed and the example sample i is first calculated, and the distance di is normalized to obtain feature similarity SIMi. It can be understood that because both sample T to be assessed and the example sample i can be represented in the form of a feature vector, various algorithms can be used to calculate the distance between the two vectors as the distance di. For example, the Euclidean distance between feature vector Ft of sample T to be assessed and feature vector Fi of the example sample i may be calculated as the distance di by using conventional mathematical methods. Alternatively, the Mahalanobis distance or the Hamming distance, etc. between Ft and Fi may be calculated as the distance di between sample T to be assessed and the example sample i. Then, the distance can be normalized to obtain feature similarity SIMi. In one example, the distance is normalized by using the following equation:

$$SIMi = 1 - di/100.$$

To make the value of SIMi is between 0 and 1. It can be understood that other normalization methods can also be used.

In an implementation, feature similarity SIMi between sample T to be assessed and the example sample i is determined based on cosine similarity between feature vector Ft and feature vector Fi. In this method, the cosine value of the angle between feature vector Ft and feature vector Fi is used to directly determine feature similarity SIMi between 0 and 1. A person skilled in the field may also use other algorithms to determine the feature similarity based on the respective feature vectors of sample T to be assessed and the sample feature i.

Therefore, in step S32, feature similarity SIMi between sample T to be assessed and each example sample i in the sample database is calculated. Next, in step S33, a certain quantity N of example samples are selected from the classification sample database based on each of calculated feature similarity SIMi.

In an implementation, feature similarities SIMi between sample T to be assessed and each example sample i are first sorted, and the N example samples are selected based on the sorting result.

In one example, the N example samples with the highest feature similarity to sample T to be assessed are selected. For example, N can be 10 or 20. Of course, example samples whose feature similarities are sorted in a predetermined range, such as between the 5th and the 15th, are selected. The method for selecting example samples can be set as needed.

In another example, exceptional values of the feature similarities that deviate from the predetermined range are first removed, and the N example samples with the highest feature similarities to samples T to be assessed are selected from the sorting result after the exceptional values are removed.

In another implementation, the certain quantity N is not predetermined. Correspondingly, an example sample with feature similarity in a predetermined range can be selected as a selected example sample. For example, a threshold can be predetermined to select example samples with feature similarity SIMi that are greater than the threshold.

As such, a certain quantity (N) of example samples are selected from the classification sample database, and the selected example samples have a higher feature similarity to the sample to be assessed, that is, features of the selected example samples are more similar to features of the sample to be assessed. Therefore, the selected example samples are more targeted and more advantageous for the accuracy of subsequent processing results.

The process of selecting example samples can also be implemented in other ways. FIG. 4 is a flowchart diagram illustrating selection of a certain quantity (the first quantity N) of example samples, according to another implementation. As shown in Figure 4, first in step S41, M (the second quantity) example samples are selected from a classification sample database to obtain sample feature Fi of each example sample i of the M example samples. It can be understood that the second quantity M of example samples are initially selected example samples, and the quantity M is greater than the previous first quantity N. In an implementation, the next step is performed by randomly selecting M example samples from the classification sample database. Alternatively, the most recently used M example samples are selected from the classification sample database to perform the next step. The second quantity M can also be determined based on a predetermined ratio, for example, 50% of the total quantity of all example samples in the classification sample database.

Next, in step S42, feature similarity SIMi between sample T to be assessed and each example sample i is calculated based on sample feature Ft of sample T to be assessed and sample feature Fi of each example sample i of the selected M example samples. For the method for calculating feature similarity SIMi in the present step, references can be made to the description of step S32 in FIG. 3. Details are omitted here for simplicity.

Then in step S43, the first quantity N of example samples is further selected from the M example samples based on calculated feature similarities SIMi. For the method for selecting the N example samples from more example samples based on feature similarity SIMi in the present step, references can be made to descriptions of step S33 in FIG. 3. Details are omitted here for simplicity.

As can be seen from the comparison between the implementation in FIG. 4 and the implementation in FIG. 3, the implementation in FIG. 4 differs from the implementation in FIG. 3 in that the M example samples are initially selected from the classification sample database to calculate the feature similarity between the sample to be assessed and the M example samples, and then the N example samples are further selected from the M example samples based on the feature similarity. This is particularly applicable when the quantity of example samples in the classification sample database is very large. In this case, the calculation cost of calculating the feature similarity between each example sample in the classification sample database and the sample to be assessed (step S32) is still high and the implementation in FIG. 4 can be adopted.

In practice, the N example samples that are finally selected are typically in multiples often, such as 10, 20, and 50. Therefore, the implementation in FIG. 3 can be adopted if the quantity of the example samples in the classification sample database is in the level of thousand. If the quantity of example samples in the classification sample database is very large, for example, there are tens of thousands or even hundreds of thousands of example samples, to speed up processing, the method in the implementation in FIG. 4 can be adopted. First, a portion of M example samples are selected from the classification sample database. For example, the quantity of the M example samples may be thousands or hundreds. Then tens of example samples are further selected based on the feature similarity for subsequent processing.

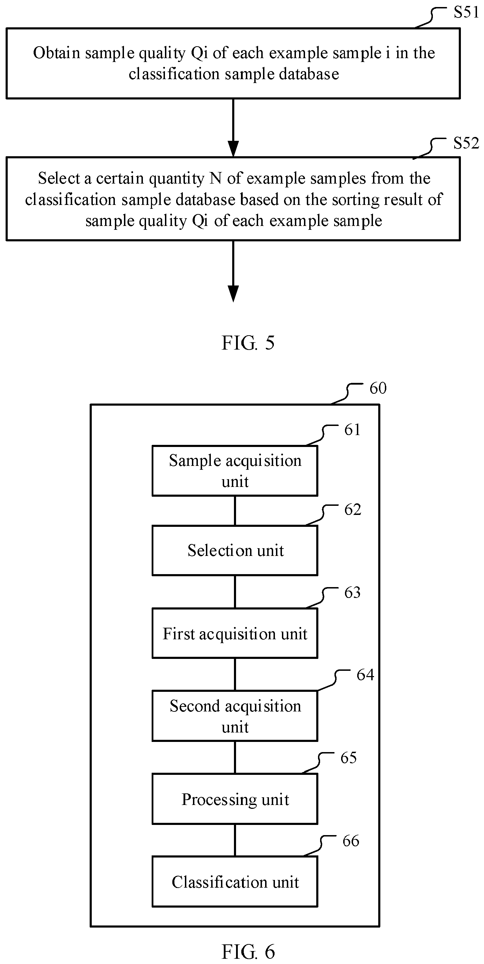

FIG. 5 is a flowchart illustrating selection of a quantity of example samples, according to another implementation. As shown in FIG. 5, in step S51, sample quality Qi of each example sample i in a classification sample database is obtained.

Sample quality Qi is used to measure the generalization ability of an example sample. The example sample corresponds to a similarity threshold that a historical assessment sample whose feature similarity to the example sample i exceeds the similarity threshold is determined in a ratio to fall in the same category as the classification sample database. In one example, a historical assessment sample whose feature similarity to the example sample i exceeds the similarity threshold is considered as falling in the same category as the classification sample database. Therefore, when the feature similarity between the sample to be assessed and the example sample exceeds Qi, there is greater reason to believe that the sample to be assessed and the example sample fall in the same category. For example, for an example sample in a junk message sample database, if the sample quality is 0.6, this means if the feature similarity score of a sample to be assessed exceeds 0.6, there is a great probability that the sample to be assessed is also a junk message. For another example, for an example sample in an advertisement picture sample database, if the sample quality is 0.8, this means if the feature similarity score of a sample to be assessed exceeds 0.8, there is a great probability that the sample to be assessed is also an advertisement picture. Generally, the lower the value of sample quality Q, the stronger the generalization ability of the sample .

Sample quality Qi is determined based on historical data of sample assessment classification. Specifically, the sample quality of a certain example sample is determined by obtaining feature similarities between a plurality of existing samples and the example sample , and the final assessment results of the plurality of existing samples. More specifically, the lowest feature similarity score among respective feature similarity scores between the example sample and the existing samples that are finally identified as falling in the same category can be determined as the sample quality score of the example sample. For example, for example sample k, five historical assessment samples were compared with k in historical records. Assume that the result of the comparison shows that the feature similarity scores of these five historical assessment samples to sample k are SIM1 = 0.8, SIM2 = 0.6, SIMS = 0.4, SIM4 = 0.65, SIMS = 0.7 respectively. Finally, the historical assessment samples whose feature similarity values are 0.6 and 0.4 are not considered to be fall in the same category as sample k, and other historical assessment samples are considered to be in the same category. In this case, sample quality Q of sample k can be considered to be 0.65, that is, the lowest value among the feature similarities between sample k and the three historical assessment samples that fall in the same category.

In an implementation, in step S51, sample quality Qi of each example sample i in a classification sample database is calculated by the historical records. In another implementation, the sample quality has been pre-calculated and is stored in the sample database. In step S51, sample quality Qi of each example sample i is read.

Next, in step S52, a certain quantity N of example samples are selected from the classification sample database based on the sorting result of the sample quality Qi of each example sample i described above. In an implementation, N example samples with the lowest values of Qi are selected from the classification sample database. In another implementation, a value of N is not specified in advance. In this case, example samples whose values of sample quality Qi are below a certain threshold can be selected. In this way, N example samples with a strong generalization ability are selected from the classification sample database for further processing.

In addition to the methods shown in FIG. 3, FIG. 4, and FIG. 5, a person skilled in the field can use a similar method to select the first quantity N of example samples from the classification sample database after reading this specification. therefore, step S22 in FIG. 2 is performed.

Referring back to FIG. 2, on the basis of selecting the N example samples, in step S23, feature similarity SIMi between sample T to be assessed and each example sample i among the N example samples are obtained, where feature similarity SIMi is determined based on sample feature Ft of sample T to be assessed and sample feature Fi of each example sample i.

It can be understood that if the N example samples are selected in the methods shown in FIG. 3 or FIG. 4, feature similarities SIMi between sample T to be assessed and all example samples/the M example samples have been calculated during the selection process. Correspondingly, in step S23, only the feature similarities between sample T to be assessed and the N selected example samples needs to be read from the calculation result.

If other methods are used to select the N example samples, then in step S23, feature similarity SIMi between sample T to be assessed and each example sample i is calculated based on sample feature Ft of sample T to be assessed and sample feature Fi of each example sample i in the N selected example samples. For the calculation method, references can be made to the description of step S32 in FIG. 3. Details are omitted here for simplicity.

In addition, in step S24, sample quality Qi of each of the N example samples selected is obtained.

It can be understood that if the N example samples are selected in the method shown in FIG. 5, the sample quality of all example samples has been obtained during the selection process. Correspondingly, in step S24, only the sample quality of the N selected example samples needs to be read from all results.

If the N example samples are selected in other methods, in step S24, obtain sample quality of the N example samples. For the method for obtaining the sample quality, references can be made to the description of step S51 in FIG. 5. Details are omitted here for simplicity.

On the basis of obtaining feature similarity SIMi between each example sample i and the sample to be assessed, and sample quality Qi of each example sample, in step S25, comprehensive similarities Si between sample to be assessed and each example sample i are obtained based on at least a difference value ri between feature similarity SIMi and sample quality Qi.

In an implementation, comprehensive similarity Si is determined to be Si = a + b * ri * c, where a and b are constants, a + b = 1, and c is a coefficient associated with sample quality Qi.

For example, in one example, Si = 0.8 + 0.2 * ri/2Qi;

In another example, Si = 0.7 + 0.3 * ri/Qi.

In an implementation, parameter c is set to be different values for different values of ri. For example, in the case of ri > = 0, c = 1/(1-Qi) and in the case of ri < 0, c = 1/Qi.

In an example, the calculation form of Si is as follows:

$$S_i = \begin{cases} 0.9 + 0.1 \times r_i / (1 - Q_i) & r_i \geq 0 \\ 0.9 + 0.1 \times r_i / Q_i & r_i < 0 \end{cases} \tag{1}$$

In the previous equation, in the case of ri > = 0, make c = 1/(1-Qi). Therefore, $r_i / (1-Q_i)$ is not greater than 1, so Si is not greater than 1. In addition, the effect of the difference value ri between the feature similarity SIMi and the sample quality Qi can be better measured. If a value of Qi is relatively large or even closer to 1, a margin (1-Qi) of the difference value ri will be very small. In this case, Si should be calculated by considering the ratio of difference value ri to its possible margin. In the case of ri < 0, c can be directly set to be 1/Qi , and Si can be calculated by considering the ratio of difference value ri to Qi.

In the process of calculating the comprehensive similarity, because the sample quality, the difference value between the feature similarity and the sample quality are comprehensively considered, the calculated comprehensive similarity can more objectively reflect the probability that the sample to be assessed and the example sample fall in the same category, and is less affected by the sample quality of the example sample. For example, assume there are two example samples A and B, and sample quality is QA = 0.4 and QB = 0.8 respectively. Assume that feature similarity between sample T to be assessed and sample A and feature similarity between sample T to be assessed and sample B are both 0.7. In such a situation, if only consider the feature similarity, it is generally considered that the sample to be assessed is either similar or dissimilar to both the example samples because the feature similarity between sample T to be assessed and sample A and the feature similarity between sample T to be assessed and sample B are the same. If the method in the previous implementation is used, for example, algorithm of equation 1 is used, comprehensive similarity SA = 0.95 between the sample to be assessed and sample A, and comprehensive similarity SB = 0.8875 between the sample to be assessed and sample B are obtained. The comprehensive similarity shows that the similarity between the sample to be assessed and sample A is different from the similarity between the sample to be assessed and sample B. the sample quality score of example sample A is only 0.4, and feature similarity between the sample to be assessed and sample A is much greater than the threshold requirement for falling in the same category, so comprehensive similarity with sample A is significantly higher. Therefore, the comprehensive similarity obtained this way can more objectively reflect the probability that the sample to be assessed and the example sample fall in the same category.

As such, in step S25, comprehensive similarities between sample T to be assessed and the N example samples are respectively calculated. Further, in step S26, it can be determined whether sample T to be assessed falls in the category of the classification sample database based on the comprehensive similarity $S_i$.

In an implementation, obtained N comprehensive similarities $S_i$ are sorted to determine the highest comprehensive similarity score. The highest comprehensive similarity score is compared with a predetermined threshold, and if the value is greater than the threshold, sample T to be assessed is considered to fall in the same category as the classification sample database.

In an implementation, total similarity score of the sample to be assessed is determined based on the N comprehensive similarities between sample T to be assessed and the N example samples, and whether sample T to be assessed falls in the category of the classification sample database is determined based on the total similarity score. The total similarity score is used to measure the degree of similarity between the sample to be assessed and the entire example sample set, or the degree of similarity between the sample to be assessed and the entire classification sample database, and the probability of falling in the same category.

In an implementation, an average value of comprehensive similarity $SIM_i$ between sample T to be assessed and each example sample i is calculated, and the average value is determined as the previous total similarity score.

In another implementation, if at least one of $r_i$ among N difference values $r_i$ that correspond to the N example samples is greater than or equal to 0, the total similarity score is determined as the maximum value among the comprehensive similarities between sample T to be assessed and the N example samples. Otherwise, the total similarity score is determined as the minimum value among the comprehensive similarities between sample T to be assessed and the N example samples.

Because sample quality difference of each example sample is considered in determining the total comprehensive score, the sample to be assessed can be determined by setting an appropriate total score threshold in advance. Correspondingly, in step S26, the total similarity score is compared with the predetermined total score threshold, and if the total similarity score of the sample to be assessed is greater than the predetermined total score threshold, the sample to be assessed can be determined as falling in the category of the classification sample database. For example, if the sample to be assessed is a received message, as long as the total similarity score of a junk message sample database is greater than the predetermined threshold, the message is also a junk message.

According to the method in the previous implementation, the feature similarity between the sample to be assessed and the example sample, and the sample quality of the sample to be assessed are comprehensively considered to determine the comprehensive similarity score of the sample to be assessed and the example sample. Therefore, the adverse impact of varied sample quality on the assessment results is reduced or avoided.

According to an implementation of another aspect, this specification also provides a device for classifying samples to be assessed. FIG. 6 is a schematic block diagram illustrating a classification device, according to one implementation. As shown in FIG. 6, a classification device 60 includes: a sample acquisition unit 61, configured to obtain a sample T to be assessed and sample feature $F_t$ of sample T to be assessed; a selection unit 62, configured to select the first quantity N of example samples from a classification sample database; a first acquisition unit 63, configured to obtain feature similarity $SIM_i$ between sample T to be assessed and each example sample i of the N example samples, where the feature similarity $SIM_i$ is determined based on sample feature $F_t$ of sample T to be assessed and sample feature $F_i$ of each example sample i; a second acquisition unit 64, configured to obtain sample quality $Q_i$ of each example sample i, where sample quality $Q_i$ corresponds to such a similarity threshold that historical assessment samples whose feature similarities to the example sample i exceed the similarity threshold are determined in a certain proportion as falling in the category of the classification sample database; a processing unit 65, configured to determine comprehensive similarities $S_i$ between sample T to be assessed and each example sample i based on at least difference value $r_i$ between feature similarity $SIM_i$ and sample quality $Q_i$; and a classification unit 66, configured to determine, based on comprehensive similarity $S_i$, whether sample T to be assessed falls in the category of the classification sample database.

In an implementation, the selection unit 62 includes a calculation subunit (not shown), configured to calculate, based on sample feature $F_t$ of sample T to be assessed and the sample features of the second quantity M of example samples in the classification sample database, feature similarities between each example sample of the second quantity M of example samples and sample T to be assessed, where the second quantity M is greater than the first quantity N;

and a selection subunit, configured to select the first quantity N of example samples from the second quantity M of example samples based on feature similarities between each second quantity M of example samples and the sample to be assessed.

In an implementation, the selection subunit is configured to select, from the second quantity M of example samples, the first quantity N of example samples with the highest feature similarities to sample T to be assessed.

According to one implementation, the selection unit 62 is configured to select the first quantity N of example samples from the classification sample database based on the sorting result of the sample quality of each example sample in the classification sample database.

In an implementation, feature similarity $SIM_i$ is determined by normalizing the distance between sample feature $F_t$ of sample T to be assessed and sample feature $F_i$ of each example sample i.

According to one implementation, the processing unit 65 is configured to determine comprehensive similarity $S_i$ as $S_i = a + b * r_i * c$, where $a + b = 1$, and c is a coefficient associated with sample quality $Q_i$.

In an implementation, in the case of $r_i >= 0$, $c = 1/(1-Q_i)$ and in the case of $r_i < 0$, $c = 1/Q_i$.

According to one implementation, the classification unit 66 is configured to determine, based on comprehensive similarities $S_i$ between sample T to be assessed and each example sample i, total similarity scores of the sample to be assessed and to determine, based on the total similarity score, whether sample T to be assessed falls in the category of the classification sample database.

In an implementation, the classification unit 66 is further configured to: if at least one $r_i >= 0$, determine the total similarity score as the maximum value among comprehensive similarities $S_i$ between sample T to be assessed and each example sample i; or otherwise, determine the total similarity score as the minimum value among comprehensive similarities $S_i$ between sample T to be assessed and each example sample i.

In an implementation, the classification unit 66 is configured to determine the total similarity score as the average score of the comprehensive similarities $S_i$ between sample T to be assessed and each example sample i.

According to the device in the previous implementation, the feature similarity score of the sample to be assessed and the sample quality of the example sample can be comprehensively considered in determining the comprehensive similarity between the sample to be assessed and the example sample. Therefore, the adverse impact of varied sample quality on the assessment results is reduced or avoided.

According to another implementation, a computer readable storage medium is also provided, where the computer readable storage medium stores a computer program, and when the computer program is executed in a computer, the computer is enabled to perform the methods described with reference to FIG. 2 to FIG.5.

According to another implementation, a computing device is further provided, including a memory and a processor, where the memory stores executable code, and when the processor executes the executable code, the methods described with reference to FIG. 2 to FIG. 5 are implemented.

A person skilled in the field should be aware that, in one or more of the previous examples, the functions described in the present disclosure can be implemented in hardware, software, firmware, or any combination of them. When these functions are implemented by software, the functions can be stored in a computer readable medium or transmitted as one or more instructions or code on the computer readable medium.

The specific implementations further describe the object, technical solutions and beneficial effects of the present disclosure.

Embodiments of the present invention are defined by the set of appended claims.

**Claims**

1. A method for classifying samples of pictures to be assessed, comprising:

   obtaining (S21) sample T to be assessed and sample feature $F_t$ of sample T to be assessed;
   selecting (S22) a first quantity N of example samples from a classification sample database, wherein the database consists of samples which belong to a same category;
   obtaining (S23) a feature similarity $SIM_i$ between sample T to be assessed and each of the N example samples i, wherein feature similarity $SIM_i$ is determined based on sample feature $F_t$ of sample T to be assessed and sample feature $F_i$ of each example sample i;
   obtaining (S24) a sample quality $Q_i$ of each example sample i, wherein the sample quality is determined by obtaining historical feature similarities between a plurality of historical samples T and the example sample, and assessment results of the plurality of historical samples;
   determining (S25) comprehensive similarities $S_i$ between sample T to be assessed and each example sample i based on at least a difference value $r_i$ between feature similarity $SIM_i$ and sample quality $Q_i$, wherein $S_i = a + b * r_i * c$, where a and b are constants, $a + b = 1$, and c is a coefficient associated with sample quality $Q_i$, and

wherein in a case of ri > = 0, c = 1/(1-Qi) and in a case of ri < 0, c = 1/Qi; and

determining (S26), based on comprehensive similarity Si, whether sample T to be assessed falls in the same category of the classification sample database.

2. The method according to claim 1, wherein the selecting the first quantity N of example samples from a classification samples comprises:

calculating feature similarities between sample T to be assessed and each of a second quantity M of example samples based on sample feature Ft of sample T to be assessed and sample features of the second quantity M of example samples in the classification sample database, wherein the second quantity M is greater than the first quantity N; and

selecting the first quantity N of example samples from the second quantity M of example samples based on feature similarity between the sample T to be assessed and each of the second quantity M of example samples.

3. The method according to claim 2, wherein the selecting the first quantity N of example samples from the second quantity M of example samples comprises: selecting, from the second quantity M of example samples, the first quantity N of example samples with highest feature similarities to sample T to be assessed.

4. The method according to claim 1, wherein the selecting the first quantity N of example samples from a classification sample database comprises: selecting the first quantity N of example samples from the classification sample database based on a sorting result of sample quality of each sample in the classification sample database.

5. The method according to claim 1, wherein feature similarity SIMi is determined by normalizing a distance between sample feature Ft of sample T to be assessed and sample feature Fi of each example sample i.

6. The method according to claim 1, wherein the determining whether sample T to be assessed falls in the same category of the classification sample database based on comprehensive similarity Si comprises:

determining, based on comprehensive similarities Si between sample T to be assessed and each example sample i, a total similarity score of the sample T to be assessed; and

determining, based on the total similarity score, whether sample T to be assessed falls in the same category of the classification sample database.

7. The method according to claim 6, wherein the determining the total similarity score of the sample T to be assessed comprises:

if at least one ri > = 0, determining the total similarity score as a maximum value among comprehensive similarities Si between the sample T to be assessed and each example sample i; or

otherwise, determining the total similarity score as a minimum value among comprehensive similarities Si between the sample T to be assessed and each example sample i.

8. The method according to claim 6, wherein the determining a total similarity score of the sample T to be assessed comprises: determining the total similarity score as an average value of comprehensive similarities Si between the sample T to be assessed and each example sample i.

9. A computer readable storage medium, wherein the computer readable storage medium stores a computer program, and when the computer program is executed in a computer, the computer is enabled to perform the method according to any one of claims 1 to 8.

10. A computing device, comprising a memory and a processor, wherein the memory stores executable code, and when executing the executable code, the processor implements the method according to any one of claims 1 to 8.


**Patentansprüche**

1. Verfahren zum Klassifizieren von Mustern von zu bewertenden Bildern, umfassend:

Erhalten (S21) eines zu bewertenden Musters T und eines Mustermerkmals Ft des zu bewertenden Musters T;

Auswählen (S22) einer ersten Menge N von Beispielmustern aus einer Klassifikationsmusterdatenbank, wobei die Datenbank aus Mustern besteht, die zu einer gleichen Kategorie gehören;

Erhalten (S23) einer Merkmalsähnlichkeit SIMi zwischen dem zu bewertenden Muster T und jedem der N Beispielmuster i, wobei die Merkmalsähnlichkeit SIMi basierend auf dem Mustermerkmal Ft des zu bewertenden Musters T und einem Mustermerkmal Fi jedes Beispielmusters i bestimmt wird;

Erhalten (S24) einer Musterqualität Qi jedes Beispielmusters i, wobei die Musterqualität durch Erhalten von historischen Merkmalsähnlichkeiten zwischen einer Mehrzahl von historischen Mustern T und dem Beispielmuster und Bewertungsergebnissen der Mehrzahl von historischen Mustern bestimmt wird;

Bestimmen (S25) von umfassenden Ähnlichkeiten Si zwischen dem zu bewertenden Muster T und jedem Beispielmuster i basierend auf mindestens einem Differenzwert ri zwischen der Merkmalsähnlichkeit SIMi und der Musterqualität Qi, wobei Si = a + b * ri * c ist, wobei a und b Konstanten sind, a + b = 1, und c ein Koeffizient ist, der der Musterqualität Qi zugeordnet ist, und wobei im Fall von ri > = 0, c = 1/(1-Qi) ist und im Fall von ri < 0, c = 1/Qi; und

Bestimmen (S26), basierend auf der umfassenden Ähnlichkeit Si, ob das zu bewertende Muster T in die gleiche Kategorie der Klassifikationsmusterdatenbank fällt.

2. Verfahren nach Anspruch 1, wobei das Auswählen der ersten Menge N von Beispielmustern aus einer Klassifikationsmusterdatenbank umfasst:

Berechnen von Merkmalsähnlichkeiten zwischen dem zu bewertenden Muster T und jedem einer zweiten Menge M von Beispielmustern basierend auf dem Mustermerkmal Ft des zu bewertenden Musters T und Mustermerkmalen der zweiten Menge M von Beispielmustern in der Klassifikationsmusterdatenbank, wobei die zweite Menge M größer als die erste Menge N ist; und

Auswählen der ersten Menge N von Beispielmustern aus der zweiten Menge M von Beispielmustern basierend auf der Merkmalsähnlichkeit zwischen dem zu bewertenden Muster T und jedem der zweiten Menge M von Beispielmustern.

3. Verfahren nach Anspruch 2, wobei das Auswählen der ersten Menge N von Beispielmustern aus der zweiten Menge M von Beispielmustern umfasst: Auswählen, aus der zweiten Menge M von Beispielmustern, der ersten Menge N von Beispielmustern mit den höchsten Merkmalsähnlichkeiten mit dem zu bewertenden Muster T.

4. Verfahren nach Anspruch 1, wobei das Auswählen der ersten Menge N von Beispielmustern aus einer Klassifikationsmusterdatenbank umfasst: Auswählen der ersten Menge N von Beispielmustern aus der Klassifikationsmusterdatenbank basierend auf einem Sortierergebnis der Musterqualität jedes Musters in der Klassifikationsmusterdatenbank.

5. Verfahren nach Anspruch 1, wobei die Merkmalsähnlichkeit SIMi durch Normalisieren eines Abstands zwischen dem Mustermerkmal Ft des zu bewertenden Musters T und dem Mustermerkmal Fi jedes Beispielmusters i bestimmt wird.

6. Verfahren nach Anspruch 1, wobei das Bestimmen, ob das zu bewertende Muster T in die gleiche Kategorie der Klassifikationsmusterdatenbank fällt, basierend auf der umfassenden Ähnlichkeit Si umfasst:

Bestimmen, basierend auf den umfassenden Ähnlichkeiten Si zwischen dem zu bewertenden Muster T und jedem Beispielmuster i, einer Gesamtähnlichkeitsbewertung des zu bewertenden Musters T; und

Bestimmen, basierend auf der Gesamtähnlichkeitsbewertung, ob das zu bewertende Muster T in die gleiche Kategorie der Klassifikationsmusterdatenbank fällt.

7. Verfahren nach Anspruch 6, wobei das Bestimmen der Gesamtähnlichkeitsbewertung des zu bewertenden Musters T umfasst:

wenn mindestens ein ri > = 0 ist, Bestimmen der Gesamtähnlichkeitsbewertung als einen Maximalwert unter den umfassenden Ähnlichkeiten Si zwischen dem zu bewertenden Muster T und jedem Beispielmuster i; oder andernfalls Bestimmen der Gesamtähnlichkeitsbewertung als einen Minimalwert unter den umfassenden Ähnlichkeiten Si zwischen dem zu bewertenden Muster T und jedem Beispielmuster i.

8. Verfahren nach Anspruch 6, wobei das Bestimmen einer Gesamtähnlichkeitsbewertung des zu bewertenden Musters T umfasst: Bestimmen der Gesamtähnlichkeitsbewertung als einen Mittelwert der umfassenden Ähnlichkeiten Si zwischen dem zu bewertenden Muster T und jedem Beispielmuster i.

9. Computerlesbares Speichermedium, wobei das computerlesbare Speichermedium ein Computerprogramm speichert, und wenn das Computerprogramm in einem Computer ausgeführt wird, der Computer in die Lage versetzt wird, das Verfahren nach einem der Ansprüche 1 bis 8 durchzuführen.

10. Rechenvorrichtung, umfassend einen Speicher und einen Prozessor, wobei der Speicher ausführbaren Code speichert, und wenn der ausführbare Code ausgeführt wird, der Prozessor das Verfahren nach einem der Ansprüche 1 bis 8 implementiert.

**Revendications**

1. Procédé de classification d'échantillons d'images à évaluer, comprenant :

l'obtention (S21) d'un échantillon T à évaluer et d'une caractéristique d'échantillon Ft de l'échantillon T à évaluer ;
la sélection (S22) d'une première quantité N d'échantillons d'exemple à partir d'une base de données d'échantillons de classification, dans lequel la base de données est constituée d'échantillons qui appartiennent à une même catégorie ;
l'obtention (S23) d'une similitude de caractéristique SIMi entre l'échantillon T à évaluer et chacun des N échantillons d'exemple i, dans lequel la similitude de caractéristique SIMi est déterminée sur la base de la caractéristique d'échantillon Ft de l'échantillon T à évaluer et de la caractéristique d'échantillon Fi de chaque échantillon d'exemple i ;
l'obtention (S24) d'une qualité d'échantillon Qi de chaque échantillon d'exemple i, dans lequel la qualité d'échantillon est déterminée en obtenant des similitudes de caractéristique historiques entre une pluralité d'échantillons historiques T et l'échantillon d'exemple, et des résultats d'évaluation de la pluralité d'échantillons historiques ;
la détermination (S25) de similitudes complètes Si entre l'échantillon T à évaluer et chaque échantillon d'exemple i sur la base d'au moins une valeur de différence ri entre la similitude de caractéristique SIMi et la qualité d'échantillon Qi, dans lequel Si = a + b * ri * c, où a et b sont des constantes, a + b = 1, et c est un coefficient associé à la qualité d'échantillon Qi, et dans lequel dans un cas où ri > = 0, c = 1/(1-Qi) et dans un cas où ri 0 < 0, c = 1/Qi ; et
la détermination (S26), sur la base de la similitude complète Si, si l'échantillon T à évaluer se trouve dans la même catégorie de la base de données d'échantillons de classification.

2. Procédé selon la revendication 1, dans lequel la sélection de la première quantité N d'échantillons d'exemple à partir d'échantillons de classification comprend

le calcul de similitudes de caractéristique entre l'échantillon T à évaluer et chacun d'une seconde quantité M d'échantillons d'exemple sur la base de la caractéristique d'échantillon Ft de l'échantillon T à évaluer et de caractéristiques d'échantillon de la seconde quantité M d'échantillons d'exemple dans la base de données d'échantillons de classification, dans lequel la seconde quantité M est supérieure à la première quantité N ; et
la sélection de la première quantité N d'échantillons d'exemple à partir de la seconde quantité M d'échantillons d'exemple sur la base de la similitude de caractéristique entre l'échantillon T à évaluer et chacun de la seconde quantité M d'échantillons d'exemple.

3. Procédé selon la revendication 2, dans lequel la sélection de la première quantité N d'échantillons d'exemple à partir de la seconde quantité M d'échantillons d'exemple comprend : la sélection, à partir de la seconde quantité M d'échantillons d'exemple, de la première quantité N d'échantillons d'exemple ayant les similitudes de caractéristique les plus élevées avec l'échantillon T à évaluer.

4. Procédé selon la revendication 1, dans lequel la sélection de la première quantité N d'échantillons d'exemple à partir d'une base de données d'échantillons de classification comprend : la sélection de la première quantité N d'échantillons d'exemple à partir de la base de données d'échantillons de classification sur la base d'un résultat de tri de la qualité d'échantillon de chaque échantillon dans la base de données d'échantillons de classification.

5. Procédé selon la revendication 1, dans lequel la similitude de caractéristique SIMi est déterminée en normalisant une distance entre la caractéristique d'échantillon Ft de l'échantillon T à évaluer et la caractéristique d'échantillon Fi de chaque échantillon d'exemple i.

**6.** Procédé selon la revendication 1, dans lequel la détermination si l'échantillon T à évaluer se trouve dans la même catégorie de la base de données d'échantillons de classification sur la base de la similitude complète Si comprend :

la détermination, sur la base des similitudes complètes Si entre l'échantillon T à évaluer et chaque échantillon d'exemple i, d'un score de similitude total de l'échantillon T à évaluer ; et
la détermination, sur la base du score de similitude total, si l'échantillon T à évaluer se trouve dans la même catégorie de la base de données d'échantillons de classification.

**7.** Procédé selon la revendication 6, dans lequel la détermination du score de similitude total de l'échantillon T à évaluer comprend :

si au moins un ri > = 0, la détermination du score de similitude total comme étant une valeur maximale parmi les similitudes complètes Si entre l'échantillon T à évaluer et chaque échantillon d'exemple i ; ou
sinon, la détermination du score de similitude total comme étant une valeur minimale parmi les similitudes complètes Si entre l'échantillon T à évaluer et chaque échantillon d'exemple i.

**8.** Procédé selon la revendication 6, dans lequel la détermination d'un score de similitude total de l'échantillon T à évaluer comprend : la détermination du score de similitude total comme étant une valeur moyenne des similitudes complètes Si entre l'échantillon T à évaluer et chaque échantillon d'exemple i.

**9.** Support de stockage lisible par ordinateur, dans lequel le support de stockage lisible par ordinateur stocke un programme informatique, et lorsque le programme informatique est exécuté dans un ordinateur, l'ordinateur est activé pour exécuter le procédé selon l'une quelconque des revendications 1 à 8.

**10.** Dispositif informatique, comprenant une mémoire et un processeur, dans lequel la mémoire stocke un code exécutable, et, lorsqu'il exécute le code exécutable, le processeur met en oeuvre le procédé selon l'une quelconque des revendications 1 à 8.

Sample T to
be assessed

Classification sample
database

Example
sample 1

Example
sample 2

Example
sample i

...

Example
sample N

Network

Processing platform

FIG. 1

```
                                                    ┌─ S21
┌─────────────────────────────────────────────────────┐
│  Obtain sample T to be assessed and sample feature Ft of sample │
│                   T to be assessed                    │
└─────────────────────────────────────────────────────┘
                         │
                         ▼                          ┌─ S22
┌─────────────────────────────────────────────────────┐
│   Determine the first quantity N of example samples from a     │
│              classification sample database           │
└─────────────────────────────────────────────────────┘
                         │
                         ▼                          ┌─ S23
┌─────────────────────────────────────────────────────┐
│  Obtain feature similarity SIMi between sample T to be assessed │
│        and each example sample i in the N example samples      │
└─────────────────────────────────────────────────────┘
                         │
                         ▼                          ┌─ S24
┌─────────────────────────────────────────────────────┐
│     Obtain sample quality Qi of each example sample i          │
└─────────────────────────────────────────────────────┘
                         │
                         ▼                          ┌─ S25
┌─────────────────────────────────────────────────────┐
│   Determine comprehensive similarity Si between sample T to be  │
│    assessed and each example sample i based on at least a       │
│   difference value ri between feature similarity SIMi and sample│
│                       quality Qi                      │
└─────────────────────────────────────────────────────┘
                         │
                         ▼                          ┌─ S26
┌─────────────────────────────────────────────────────┐
│  Determine whether sample T to be assessed falls in the category│
│            of the classification sample database      │
└─────────────────────────────────────────────────────┘
```

FIG. 2

S31

Obtain sample feature Fi of each example sample i

S32

Calculate feature similarity SIMi between sample T to be assessed and each example sample i based on sample feature Ft of sample T to be assessed and sample feature Fi of each example sample i

S33

Select a certain quantity N of example samples based on each calculated feature similarity SIMi

FIG. 3

S41

Select M example samples from the classification sample database and obtain sample feature Fi of each example sample i in the M example samples

S42

Calculate feature similarity SIMi between sample T to be assessed and each example sample i based on sample feature Ft of sample T to be assessed and sample feature Fi of each example sample i in the M example samples

S43

Select N example samples from the M example samples based on each calculated feature similarity SIMi

FIG. 4

S51

Obtain sample quality Qi of each example sample i in the classification sample database

S52

Select a certain quantity N of example samples from the classification sample database based on the sorting result of sample quality Qi of each example sample

FIG. 5

60

61

Sample acquisition unit

62

Selection unit

63

First acquisition unit

64

Second acquisition unit

65

Processing unit

66

Classification unit

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SWATI PANDIT et al.** ENHANCED SPAM FILTERING WITH FUZZY SIMILARITY. *International Journal of Advanced Computational Engineering and Networking,* 27 February 2015, 2320-2106